# EUROPÄISCHE PATENTANMELDUNG

(11) **EP 0 654 333 A1**
(43) Veröffentlichungstag der Anmeldung: **24.05.1995**
(21) Anmeldenummer: 94116735.5
(22) Anmeldetag: 24.10.1994
(51) Int. Cl.: B27G 19/10, B27C 1/08, B23Q 3/00, B27C 5/00

(54) **Maschine zum Bearbeiten von Werkstücken aus Holz, Kunststoff und dergleichen**

(30) Priorität: 24.11.1993 DE 4339953
(71) Anmelder: Michael Weinig Aktiengesellschaft, D-97941 Tauberbischofsheim (DE)
(72) Erfinder: Schmitt, Gerhard, D-97950 Grossrinderfeld (DE)
(74) Vertreter: Jackisch-Kohl, Anna-Katharina

(57) **Zusammenfassung**

Die Maschine hat ein rotierendes Werkzeug (3) oberhalb einer Auflage für das zu bearbeitende Werkstück und ein unteres Werkzeug (4) zur Bearbeitung der Unterseite des Werkstückes. Zur Abstützung des Werkstückes bei der Bearbeitung ist eine Andrückvorrichtung vorgesehen. Sie hat ein Andrückelement (28) vor und ein Andrückelement (36) hinter dem unteren Werkzeug (4). Beide Andrückelemente (28,36) drücken das Werkstück bei der Bearbeitung durch das untere Werkzeug (4) nach oben gegen ein Abstützelement (24). Da die Andrückelemente (28,36) unterhalb des Werkstückes vorgesehen sind, können sie gleichzeitig auch als Auflage für das Werkstück bei der Bearbeitung dienen. Es läßt sich dadurch mit hoher Genauigkeit bearbeiten.

## Beschreibung

Die Erfindung betrifft eine Maschine zum Bearbeiten von Werkstücken aus Holz, Kunststoff und dergleichen nach dem Oberbegriff des Anspruches 1.

Es sind solche Maschinen bekannt, mit denen aus einem Werkstück Stäbe mit rundem oder eckigem Querschnitt gefräst werden. Die beiden in Transportrichtung des Werkstückes hintereinander angeordneten Werkzeuge bearbeiten das Werkstück zunächst an der Ober- und anschließend an der Unterseite. Die dem unteren Werkzeug zugeordnete Andrückvorrichtung ist im Bereich oberhalb des unteren Werkzeuges angeordnet und belastet das Werkstück nach unten in Richtung auf das Werkzeug. Dadurch wird aber keine genaue Führung des Werkstückes während der Bearbeitung erreicht, so daß die herzustellenden Stäbe keine ausreichende Genauigkeit haben.

Der Erfindung liegt die Aufgabe zugrunde, die gattungsgemäße Maschine so auszubilden, daß die Werkstücke mit hoher Genauigkeit bearbeitet werden können.

Diese Aufgabe wird bei der gattungsgemäßen Maschine erfindungsgemäß mit den kennzeichnenden Merkmalen des Anspruches 1 gelöst.

Bei der erfindungsgemäßen Maschine sind die Andrückelemente im Bereich vor und hinter dem unteren Werkzeug so angeordnet, daß sie das zu bearbeitende Werkstück nach oben gegen das Abstützelement drücken. Da die Andrückelemente unterhalb des Werkstückes vorgesehen sind, können sie gleichzeitig auch als Auflage für das Werkstück bei der Bearbeitung dienen. Das Werkstück ist während der Bearbeitung einwandfrei geführt, so daß aus ihm Stäbe mit hoher Genauigkeit hergestellt werden können.

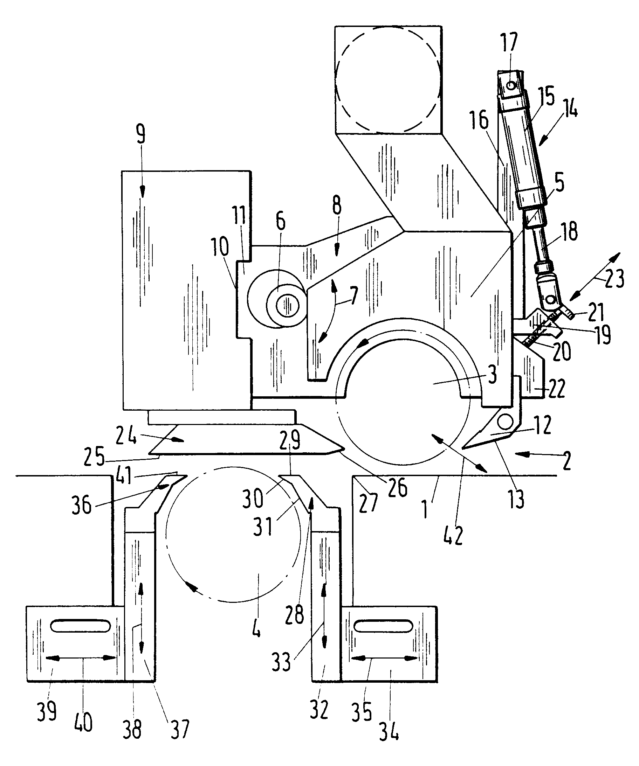

Weitere Merkmale der Erfindung ergeben sich aus den weiteren Ansprüchen, der Beschreibung und der Zeichnung.

Die Erfindung wird anhand eines in der Zeichnung schematisch dargestellten Ausführungsbeispieles näher erläutert.

Die Abstützeinrichtung für eine Maschine zum Bearbeiten von Werkstücken aus Holz, Kunststoff und dergleichen hat eine Auflage 1, die ein Maschinentisch oder dergleichen sein kann. Auf der Auflage 1 werden die (nicht dargestellten) Werkstücke in Richtung des Pfeiles 2 durch die Maschine gefördert. Als Transporteinrichtung können auf dem Werkstück aufliegende, drehbar angetriebene Walzen, Rollen oder dergleichen vorgesehen sein, deren Ausbildung bekannt ist und darum nicht näher beschrieben wird.

Die Werkstücke werden zunächst von einem auf einer oberen horizontalen Spindel sitzenden Werkzeug 3 bearbeitet, das in Pfeilrichtung drehbar angetrieben wird. In Transportrichtung 2 mit Abstand hinter dem Werkzeug 3 ist ein drehbar angetriebenes Werkzeug 4 vorgesehen, das auf einer horizontalen unteren Spindel sitzt und mit dem die Werkstücke an der Unterseite bearbeitet werden. Mit den beiden Werkzeugen 3, 4 werden aus einem Werkstück Rundstäbe oder Leisten hergestellt. Dementsprechend sind beide Werkzeuge 3, 4 in Achsrichtung so profiliert, daß sie beispielsweise aus einem rechteckigen länglichen Werkstück mehrere nebeneinander liegende Rundstäbe herstellen.

Das Werkzeug 3 sitzt unter einer Absaughaube 5, mit der die beim Bearbeiten der Werkstücke anfallenden Späne und dergleichen abgesaugt werden. Die Absaughaube 5 kann mittels einer Exzentereinstelleinrichtung 6 in Richtung des Pfeiles 7 verstellt werden. Eine solche Verstellung ist beispielsweise erforderlich, wenn auf der oberen horizontalen Spindel ein Werkzeug 3 mit einem anderen Flugkreisdurchmesser befestigt werden soll.

Die Exzentereinstelleinrichtung 6 ist an einem Träger 8 vorgesehen, der einen Spindelschieber bildet, der in bekannter Weise in Höhenrichtung zur Anpassung an unterschiedlich dicke Werkstücke verstellbar ist.

In Transportrichtung 2 vor dem Werkzeug 3 ist ein an der Absaughaube 5 angeordnetes Andrückelement 12 vorgesehen, das eine in Transportrichtung 2 nach vorn und unten geneigt verlaufende Andrückfläche 13 hat. Durch dieses Andrückelement 12 wird das zu bearbeitende Werkstück fest gegen die Auflage 1 gedrückt. Das Andrückelement 12 wird über eine Kolben-Zylinder-Einheit 14 belastet, deren Zylinder 15 mit seinem oberen Ende am oberen Ende eines Armes 16 angelenkt ist, der Teil des Spindelschiebers ist. Die Schwenkachse 17 des Zylinders 15 liegt parallel zur Drehachse des Werkzeuges 3. Die Kolbenstange 18 ist an einem mit der Absaughaube 5 verbundenen Halter 19 angelenkt, in der eine Stellschraube 20 drehbar gelagert ist. Sie hat einen Drehgriff 21, mit dem sich die Stellschraube 20 leicht drehen läßt. Sie liegt mit ihrem freien Ende an einem Gegenlager 22 an, das Teil des Spindelschiebers ist. Durch Drehen der Stellschraube 20 wird sie in Richtung des Doppelpfeiles 23 verstellt. Dabei wird über den Halter 19 die Absaughaube 5 um die Achse der Exzentereinstelleinrichtung 6 geschwenkt. Da das Andrückelement 12 an der Absaughaube 5 vorgesehen ist, wird auf diese Weise auch der Abstand der dem Werkzeug 3 zugewandten Spitze des Andrückelementes 12 von der Auflage 1 verändert. Somit kann das Andrückelement 12 feinfühlig und genau an die Dicke des zu bearbeitenden Werkstückes angepaßt werden. Mit der Exzentereinstelleinrichtung 6 kann der Abstand der Spitze des Andrückelementes 12 zum Flugkreisdurchmesser des Werkzeuges 3 eingestellt werden (Pfeil 42).

Die vorzugsweise pneumatische Kolben-Zylinder-Einheit 14 steht ständig unter Druck und übt somit über die Absaughaube 5 eine Kraft auf das Andrückelement 12 aus, so daß das unter dem Andrückelement in Transportrichtung 2 sich bewegende Werkstück fest gegen die Auflage 1 gedrückt wird.

In Transportrichtung 2 hinter dem Werkzeug 3 befindet sich ein Abstützelement 24, das an der Unterseite einer Stütze 9 befestigt ist. Sie ist zur Anpassung an unterschiedliche Flugkreisdurchmesser des Werkzeuges 4 in bekannter Weise in Höhenrichtung verstellbar. Es ist aber auch möglich, nur das Abstützelement 24 in der Höhe verstellbar auszubilden. Die Stütze 9 ist am Spindelschieber vorgesehen. Vorzugsweise ist das Abstützelement 24 für sich oder zusammen mit der Stütze 9 in und entgegen Transportrichtung 2 sowie in der Horizontalen senkrecht hierzu bzw. parallel zur Drehachse des Werkzeuges 3, 4 verstellbar. Das Abstützelement 24 reicht bis nahe an das Werkzeug 3 und befindet sich mit Abstand oberhalb des Werkzeuges 4. Das Abstützelement 24 ist in Ansicht trapezförmig ausgebildet, wobei die längere Seite 25 als Abstützfläche für das Werkstück während der Bearbeitung durch das Werkzeug 4 dient. An dem dem Werkzeug 3 zugewandten Ende verläuft die Abstützfläche 25 leicht ansteigend. Dadurch ist gewährleistet, daß das zu bearbeitende Werkstück, wenn es in Transportrichtung 2 unter dem Werkzeug 3 hindurchtritt, nicht an einer Kante des Abstützelementes 24 hängen bleibt. Die dem Werkzeug 3 zugewandte Kante 26 der Abstützfläche 25 liegt etwa in Höhe des in Transportrichtung 2 vorderen Endes 27 des unter dem Werkzeug 3 befindlichen Teils der Auflage 1. Die Auflagefläche ist im Bereich des Werkzeuges 4 unterbrochen. Zwischen dem Werkzeug 4 und dem unterhalb des Werkzeuges 3 liegenden Teils der Auflage 1 ist ein Andrückelement 28 vorgesehen, das eine ebene Abstützfläche 29 hat, an dem das Werkstück nach dem Durchtritt unter dem Werkzeug 3 aufliegt. Die Andrückfläche 29 liegt geringfügig im Bereich oberhalb der Auflagefläche 1. Die Andrückfläche 29 reicht bis nahe an den Arbeitsdurchmesser des Werkzeuges 4, so daß das Werkstück kurz vor der Bearbeitung durch das Werkzeug 4 optimal abgestützt ist. Die dem Werkzeug 4 zugewandte Stirnseite des Andrückelementes 28 wird durch zwei stumpfwinklig aneinanderschließende Vorderseiten 30 und 31 gebildet. Dadurch reicht das Andrückelement 28 sehr nahe an den Arbeitsdurchmesser des Werkzeuges 4. Das Andrückelement 28 sitzt auf einem Träger 32, der in Höhenrichtung 33 verstellbar ist. Der Träger 32 ist an einem Stellteil 34 befestigt, der senkrecht zur Verstellrichtung 33 in Horizontalrichtung 35 verstellbar ist. Somit kann das Andrückelement 28 in zwei zueinander senkrechten Richtungen verstellt und somit optimal auf das jeweilige Werkzeug 4 eingestellt werden. Der Träger 32 ist mit geeigneten Führungen am Stellteil 34 verschiebbar gelagert. Der Stellteil 34 seinerseits ist mit entsprechenden Führungen maschinenseitig verstellbar gelagert.

Während sich das Andrückelement 28 in Transportrichtung 2 unmittelbar vor dem Werkzeug 4 befindet, ist in Transportrichtung 2 unmittelbar hinter dem Werkzeug 4 ein weiteres Andrückelement 36 vorgesehen, das gleich ausgebildet ist wie das Andrückelement 28. Es ist lediglich spiegelbildlich zum Andrückelement 28 vorgesehen. Es sitzt ebenfalls auf einem Träger 37, der in Höhenrichtung 38 verstellbar ist. Der Träger 37 ist an einem Stellteil 39 vorgesehen, der senkrecht in bezug auf die Verstellrichtung 38 in Pfeilrichtung 40 verstellbar ist. Im Ausführungsbeispiel ist der Stellteil 39 wiederum in Horizontalrichtung verstellbar. Somit kann auch das Andrückelement 36 in zueinander senkrechten Richtungen genau eingestellt werden. Das Andrückelement 36 hat wiederum die ebene Andrückfläche 41 für das Werkstück. Die Andrückelemente mit den zugehörigen Verstellteilen sind, wie die Zeichnung zeigt, spiegelsymmetrisch zueinander angeordnet. Das Abstützelement 24 ist im Bereich oberhalb des Werkzeuges 4 so angeordnet, daß seine Abstützfläche 25 die beiden Andrückflächen 29 und 41 der unteren Andrückelemente 28 und 36 überdeckt. Außerdem reicht die Abstützfläche 25 des oberen Abstützelementes 24 bis nahe an den in Transportrichtung 2 hinter dem Werkzeug 4 befindlichen Teil der Auflage 1.

Auf der Auflage 1 wird in Transportrichtung 2 ein Werkstück herantransportiert, das durch das Andrückelement 12 fest gegen die Auflage 1 gedrückt wird. Das Werkstück wird dann mittels des Werkzeuges 3 bearbeitet. Sollen aus dem Werkstück Rundstäbe gefertigt werden, dann werden mit diesem Werkzeug 3 zunächst an der Oberseite des Werkstückes aneinanderliegende, im Querschnitt halbkreisförmige Profilierungen gefräst. Unmittelbar hinter dem Werkzeug 3 gelangt das an seiner Oberseite bearbeitete Werkstück unter das Andrückelement 24 und anschließend auf das Andrückelement 28. Dadurch ist das Werkstück unmittelbar vor dem unteren Werkzeug 4 optimal abgestützt. Von dem unteren Werkzeug 4, dessen Arbeitsdurchmesser über die die Andrückflächen 29, 41 enthaltende Ebene reicht, wird das Werkstück an der Unterseite so bearbeitet, daß nunmehr die anderen Hälfte aus dem Werkstück gefräst wird, so daß nunmehr einzelne, voneinander getrennte Rundstäbe gebildet werden. Während der Bearbeitung durch das Werkzeug 4 ist das Werkstück nach Art einer Dreipunktabstützung durch die Abstütz- und Andrückeleemente 24, 28, 36 einwandfrei abgestützt und geführt, so daß die Rundstäbe sehr genau gefertigt werden können. Anstelle der Rundstäbe können aus dem Werkstück auch eckige Stäbe gefräst werden. In diesem Falle werden entsprechende Werkzeuge 3, 4 eingesetzt. Infolge der beschriebenen Dreipunktabstützung können auch kurze Werkstücke einwandfrei bearbeitet werden.

Die Andrückelemente 28, 36 können bei Bedarf, beispielsweise bei einer Verstopfung im Bereich des Werkzeuges 4, nach unten getaktet werden, so daß sich die Störung leicht beheben läßt. Zum gleichen Zweck kann die Kolben-Zylinder-Einheit 14 doppeltwirkend ausgebildet sein, so daß beispielsweise bei einer Verstopfung im Bereich des Werkzeuges 3 die Absaughaube 5 vom Werkstück abgehoben werden kann.

## Patentansprüche

1. Maschine zum Bearbeiten von Werkstücken aus Holz, Kunststoff und dergleichen, mit mindestens einem rotierenden Werkzeug oberhalb einer Auflage für das Werkstück und mit mindestens einem weiteren rotierenden unteren Werkzeug zur Bearbeitung der Unterseite des Werkstückes und mit einer Abstützeinrichtung, die wenigstens eine vor und hinter dem unteren Werkzeug wirksame Andrückvorrichtung aufweist,
dadurch gekennzeichnet, daß die Andrückvorrichtung durch wenigstens ein Andrückelement (28) vor und wenigstens ein Andrückelement (36) hinter dem unteren Werkzeug gebildet ist, und daß die Andrückelemente (28, 36) das Werkstück bei der Bearbeitung durch das untere Werkzeug (4) nach oben gegen wenigstens ein Abstützelement (24) drücken.

2. Maschine nach Anspruch 1,
dadurch gekennzeichnet, daß wenigstens eines der Andrückelemente (28, 36) in der Höhe verstellbar ist.

3. Maschine nach Anspruch 1 oder 2,
dadurch gekennzeichnet, daß wenigstens eines der Andrückelemente (28, 36) in Transportrichtung (2) des Werkstückes durch die Maschine verstellbar ist.

4. Maschine nach einem der Ansprüche 1 bis 3,
dadurch gekennzeichnet, daß die Andrückelemente (28, 36) auf einem Träger (32, 37) angeordnet sind, der an einem Stellteil (34, 39) höhenverstellbar gelagert ist.

5. Maschine nach Anspruch 4,
dadurch gekennzeichnet, daß der Stellteil (34, 39) quer, vorzugsweise senkrecht, zum Träger (32, 37) verstellbar ist.

6. Maschine nach einem der Ansprüche 1 bis 5,
dadurch gekennzeichnet, daß das Abstützelement (24) im Bereich oberhalb des unteren Werkzeuges (4) angeordnet ist.

7. Maschine nach einem der Ansprüche 1 bis 6,
dadurch gekennzeichnet, daß das Abstützelement (24) im Bereich oberhalb wenigstens des einen Andrückelementes (28, 36) vorgesehen ist.
